# EUROPEAN PATENT APPLICATION

(11) **EP 2 887 278 A1**
(43) Date of publication of application: **24.06.2015**
(21) Application number: 13290321.2
(22) Date of filing: 20.12.2013
(51) Int. Cl.: G06Q 10/00

(54) **Dynamic travel planner**

(71) Applicant: Amadeus S.A.S., 06410 Biot (FR)
(72) Inventor: Abboud, Edmond, 06600 Antibes (FR)
(74) Representative: Samson & Partner Patentanwälte mbB

(57) **Abstract**

Methods, systems and computer program products for determining at least one travel solution for a travel request. The travel request that indicates an origin, at least one destination, and at least one time constraint is received. Based on the travel request, travel paths that comprise the origin and the at least one destination are built based at least in part on the at least one time constraint. At least one candidate travel solution is determined for each travel path based at least in part on the at least one time constraint. At least one travel solution for the travel request is determined based at least in part on pricing and availability for the at least one candidate travel solution.

## Description

### Background

The invention is generally related to computers and computer software, and in particular to methods, systems, and computer program products for travel planning and reservations.

Computer technology is increasingly used in the travel industry to manage and support travel reservations, as well as data associated therewith. In particular, third party reservation agents, such as travel agents, and/or customers (e.g., travelers) often utilize computer based devices to interface with a travel reservation system, such as a Global Distribution System (GDS), to book travel arrangements and/or travel related services for the customer. When reserving travel related services using such reservation terminals in communication with such travel reservation systems, a travel agent and/or customer may initiate a reservation session between a client device and the travel reservation system to book one or more travel inventory items corresponding to the travel related services (e.g., flights, hotels, rail transportation, dining reservations, etc.) for the customer during the reservation session.

Because computer technology is utilized to increasingly manage and support travel reservations, a continuing need exists in the art for improved computer based travel planning and reservation systems, as well as improved methods and computer program products, for facilitating travel related service booking.

### Summary

Embodiments of the invention generally comprise a method, system, and computer program product for generating one or more travel solutions for a travel request. Consistent with embodiments of the invention, a travel request that indicates an origin, one or more destinations, and one or more time constraints may be received. Based on the one or more time constraints, travel paths may be built that comprise the origin and the one or more destinations. Based at least in part on the one or more time constraints, one or more candidate travel solutions may be determined for each travel path. In general, each candidate travel solution comprises a plurality of priced travel inventory items for travel services, such as flights, hotel accommodations, car rentals, rail tickets, etc, that fulfill the travel request.. Based on the price and availability for the one or more candidate travel solutions, embodiments of the invention may determine at least one travel solution for the travel request.

### Brief Description of the Several Views of the Drawings

The accompanying drawings, which are incorporated in and constitute a part of this specification, illustrate various embodiments of the invention and, together with a general description of the invention given above and the detailed description of the embodiments given below, serve to explain the embodiments of the invention.
FIG. 1 is a block diagram of one or more reservation systems, one or more inventory systems, and one or more client devices consistent with embodiments of the invention.
FIG. 2 is a block diagram of a reservation system of FIG. 1.
FIG. 3 is a block diagram of some hardware and software components of the reservation systems, inventory systems, and client devices of FIG. 1.
FIG. 4 is a flowchart illustrating a sequence of operations that may be performed by the systems of FIGS. 1-3 to generate one or more travel solutions for a travel request consistent with some embodiments of the invention.
FIGS. 5A-G provide example travel graph shapes that may be utilized by the systems of FIGS. 1-3 to determine one or more travel graphs for a travel request.
FIGS. 6A-M illustrate example travel request and travel graphs that may determined by the systems of FIGS. 1-3 consistent with some embodiments of the invention.
FIGS. 7A-D illustrate example travel graph and travel paths that may be determined by the systems of FIGS. 1-3 consistent with some embodiments of the invention.
FIGS. 8A-B illustrate example travel paths that may be determined by the systems of FIGS. 1-3 consistent with some embodiments of the invention.
FIGS. 9A-D are sequence diagrams that illustrate sequences of operations that may be performed by the systems of FIGS. 1-3 to determine one or more travel solutions for a travel request.
FIG. 10 is a diagrammatic view of an example graphical user interface that may be output on a display of a client device to interface with a reservation system to generate a travel request consistent with embodiments of the invention.

### Detailed Description

Embodiments of the invention provide a system, method, and computer program product for determining one or more travel solutions for a travel request. Consistent with some embodiments of the invention, each travel solution may comprise an origin and one or more destinations, where each travel solution may provide travel inventory items for travel services (e.g., flight tickets, car rentals, rail travel tickets, accommodations, taxi services, dining reservations, etc.) associated with the origin and the one or more destinations. Moreover, each travel solution may facilitate the reservation of each travel inventory item included therein by a user concurrently. In general, a received travel request may indicate an origin, one or more destinations, one or more time constraints, traveler (i.e., user) preferences, and/or other information that may be considered for planning and booking travel services. Based on the origin, the one or more destinations, the one or more time constraints, and/or user preferences, embodiments of the invention may determine one or more travel solutions that comprise travel inventory items for travel services (e.g., flights, car rental, rail travel, ferry, etc.) for the origin and one or more destinations that may be booked/reserved to fulfill the travel request. In general, the travel solutions meet the one or more time constraints, include desired accommodations and/or services, and correspond to any indicated user preferences.

For example, if a travel request for a traveler indicates an origin, a first destination, a second destination, and a two week period in which a traveler desires to travel to the two destinations, embodiments of the invention may determine one or more travel solutions that include travel inventory items for travel services from the origin to the first destination, travel services from the first destination to the second destination, and travel services from the second destination back to the origin, where the travel solution would be within the two week period desired by the traveler. In this example, if the traveler needed hotel accommodations for the first destination, the travel solution may further include a hotel reservation for the first destination. If the traveler prefers a particular chain or type of hotel, the hotel reservation may be the preferred chain or type of hotel. Furthermore, if the traveler indicates a particular range of days in which the traveler desires to be at the first destination, the travel solution may comprise travel and lodging accommodations such that the traveler will be at the first destination for the particular range of days. In addition, the travel request may indicate that the traveler prefers to drive (i.e., rent a car) for distances under a defined amount (e.g., 200 miles) and/or duration (e.g., 6 hours), and the travel solution may comprise at least one car rental travel service if the distance and/or duration of travel meet the traveler's preferences between the origin, the first destination, and/or second destination. Therefore, as illustrated in this example, embodiments of the invention may determine one or more travel solutions that each provide a planned schedule of travel and accommodation services for a traveler, and the traveler may select a particular travel solution for booking to thereby book some or all of the travel inventory items for the travel and accommodation services of the particular travel solution concurrently.

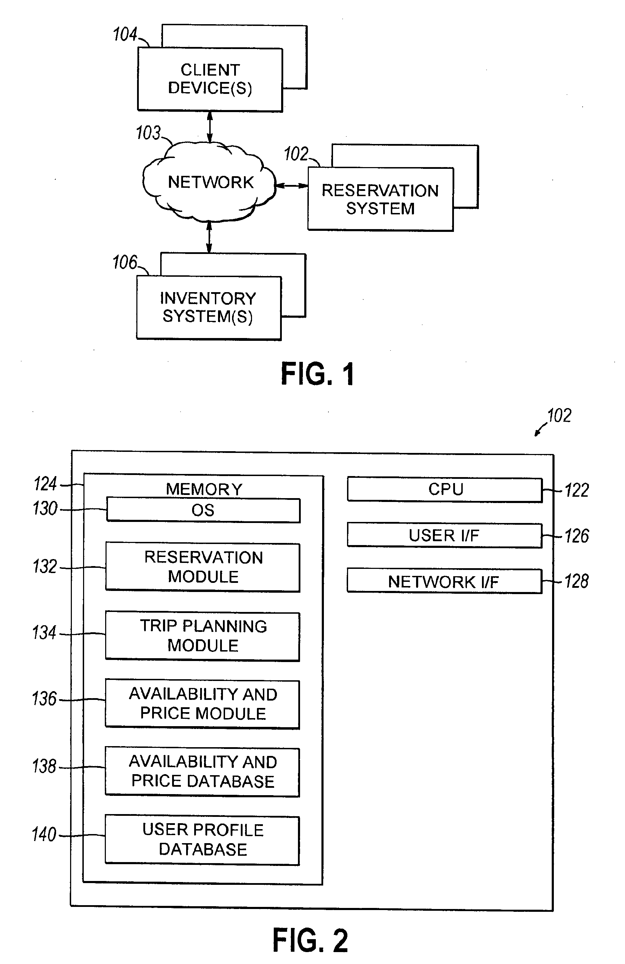

Turning now to the figures and particularly to FIG. 1, this figure provides a block diagram illustrating the one or more devices and/or systems consistent with embodiments of the invention. As shown in FIG. 1, a reservation system 102 may be implemented as one or more servers. The reservation system 102 may be connected to a communication network 103, where the communication network 103 may comprise the Internet, a local area network (LAN), a wide area network (WAN), a cellular voice/data network, one or more high speed bus connections, and/or other such types of communication networks. A client device 104 may be connected to the communication network 103, such that a customer or reservation agent (e.g., travel agency or other such travel reservation service) may initialize a travel planning and reservation session with the reservation system 102 to communicate a travel request and/or other such relevant data to the reservation system 102. The client device 104 may be a personal computing device, tablet computer, thin client terminal, smart phone and/or other such computing device.

One or more servers for one or more inventory systems 106 of one or more travel merchants are connected to the communication network 103. The reservation system 102 may initialize an inventory session over the communication network 103 with each inventory system 106 for which a travel inventory item is to be booked. Consistent with embodiments of the invention, a reservation agent or customer (i.e., a traveler) may interface with the reservation system 102 using the client device 104 in a travel planning and reservation session to provide data for a travel request. In turn, the reservation system may interface with each inventory system 106 of each travel merchant that provides a travel inventory item that generally requires an availability determination (e.g., a flight, rail ticket, hotel room, event ticket, etc.) to determine availability for each travel inventory item requiring an availability determination for the booking request. In addition, consistent with some embodiments of the invention, some inventory systems 106 may manage booking of services that do not require an availability determination, such as a restaurant reservation, a taxi service, a non-limited availability event/location admission ticket, etc. Moreover, while the reservation system 102 and inventory system 106 are described herein as separate entities, the invention is not so limited. In some embodiments, various hardware, software components, and/or sequences of operations described with respect to the reservation system 102 or inventory system 106 may be implemented on either the reservation system 102 and/or inventory system 106. Furthermore, as will be appreciated, in some embodiments the reservation system 102 and inventory system 106 may be components of a GDS.

As will be described in detail below, consistent with embodiments of the invention, an interface may be generated by the reservation system such that a user (i.e., a traveler or a travel agent) may input information that may be utilized to generate a travel request that may in turn be used to determine one or more travel solutions consistent with embodiments of the invention. In general, such interface may be accessible via a client device 104, such as a personal computer, a portable electronic device (e.g., a smart phone, a tablet, a laptop, etc.), or a terminal configured to interface with a server providing such interface. Consistent with these embodiments, a user may input an origin, one or more destinations, one or more time constraints, and/or one or more user preferences. Based on the input information, a travel request may be generated, and one or more travel solutions may be dynamically determined based on the content of the travel request. User preferences may include, for example, preferred methods of travel (e.g., flights, rail travel, car rental, etc.), preferred methods of travel for travel that does not exceed a defined distance or duration, preferred travel merchants, etc.

FIG. 2 provides a block diagram that illustrates the components of the one or more servers of the reservation system 102. The reservation system 102 includes at least one processor 122 including at least one hardware-based microprocessor and a memory 124 coupled to the at least one processor 122. The memory 124 may represent the random access memory (RAM) devices comprising the main storage of the reservation system 102, as well as any supplemental levels of memory, e.g., cache memories, non-volatile or backup memories (e.g., programmable or flash memories), read-only memories, etc. In addition, memory 124 may be considered to include memory storage physically located elsewhere in the travel and reservation system 102, e.g., any cache memory in a microprocessor, as well as any storage capacity used as a virtual memory, e.g., as stored on a mass storage device or on another computer coupled to the reservation system 102.

For interface with a user or operator, the reservation system 102 may include a user interface 126 incorporating one or more user input/output devices, e.g., a keyboard, a pointing device, a display, a printer, etc. Otherwise, data may be communicated to and from another computer or terminal (e.g., the client device 104, the inventory system 106) over a network interface 128 coupled to the communication network 103. The reservation system 102 also may be in communication with one or more mass storage devices, which may be, for example, internal hard disk storage devices, external hard disk storage devices, external databases, storage area network devices, etc.

The reservation system 102 typically operates under the control of an operating system 130 and executes or otherwise relies upon various computer software applications, components, programs, objects, modules, engines, data structures, etc., including for example, a reservation module 132, a trip planning module 134, and an availability and price module 136. In general, the reservation module 132 may be configured to interface with one or more travel merchant systems (e.g., inventory systems 106) to reserve travel services based on received data. The trip planning module 134 may be configured to analyze a received travel request and to determine one or more travel solutions for the travel request that meet the constraints and preferences indicated in the travel request and/or indicated in a user profile associated with the travel request.

The availability and price module 136 may be configured to query inventory systems 106 and store pricing and availability information for various travel inventory items of various types of travel services (e.g., a ticket for a flight, a ticket for rail travel, etc.) in an availability and price database 138. In general, the information stored in the availability and price database 138 may be accessible by the trip planning module 134, such that the trip planning module may determine the one or more travel solutions based at least in part on availability and pricing information for one or more travel inventory items of relevant travel services. Furthermore, memory 124 may include a user profile database 140 that stores information for a user (e.g., a customer or a reservation agent) in a user profile. For example, the user profile database 140 may store travel preferences for a customer in a user profile associated with the customer. For example, the user profile may indicate that a customer prefers a particular type or chain of hotel, a particular airline, a particular rental car company, etc. In addition, the user profile may indicate that a customer prefers a type of travel (e.g., flight, car rental, rail travel, ferry, etc.), prefers to drive (i.e., rent a car) if the travel duration and/or distance are under a predefined value, and/or other such travel preferences. In some embodiments of the invention, a travel request may include information that identifies a particular user profile. In these embodiments, the trip planning module 134 may access the user profile database 140 such that the one or more determined travel solutions may be based at least in part on preferences of the user. In some embodiments, a travel request may include one or more user preferences.

Moreover, various applications, components, programs, objects, modules, engines etc. may also execute on one or more processors in another computer coupled to the reservation system 102 via the communication network 103, e.g., in a distributed or client-server computing environment, whereby the processing required to implement the functions of a computer program may be allocated to multiple computers over a network. For example, some of the functionality described herein as being incorporated into a reservation system 102 and/or modules of the reservation system 102 may be implemented in one or more servers. Consistent with embodiments of the invention, the modules 132-136 and/or other such modules/applications may be executing on one or more servers of the reservation system 102, and the modules 132-136 may cause the processor 122 of the reservation system 102 to perform operations consistent with embodiments of the invention.

The memory 124 of the travel and reservation system 102 may generally store one or more databases including, for example, the availability and price database 138 and the user profile database 140. The databases 138, 140 may comprise data and supporting data structures that store and organize the data. In particular, the databases 138, 140 may be arranged with any database organization and/or structure including, but not limited to, a relational database, a hierarchical database, a network database, and/or combinations thereof. A database management system in the form of a computer software application executing as instructions on a processing unit of the reservation system 102 may be used to access the information or data stored in records of the databases 138, 140 in response to a query, where a query may be dynamically determined and executed by the operating system 130, other applications, and/or one or more modules 132-136.

The availability and price database 138 may store availability and price information for travel inventory items for travel services, such as flights, rail tickets, etc. Consistent with embodiments of the invention, the availability and price module 136 may periodically update the stored information such that up-to-date information may be accessible by the trip planning module 134. By maintaining up-to-date availability and price information, embodiments of the invention may price and schedule one or more travel solutions that may comprise one or more availability and price limited travel services without the need to query an inventory system 106 during analysis for pricing and availability information for each travel service during the planning phase (i.e., determining travel graphs, building travel paths, pricing individual requests, etc.). The user profile database 140 may store one or more user profiles, where each user profile may correspond to a travel customer of the reservation system (i.e., a traveler/user). In general, each user profile may correspond to a travel customer that has created an account to store information associated with the travel customer. For example, a user profile may store contact information for the travel customer (e.g., an email address, a mobile telephone number, etc.), payment information for the travel customer, information included in a passenger name record, preferences of the traveler, and/or other such information.

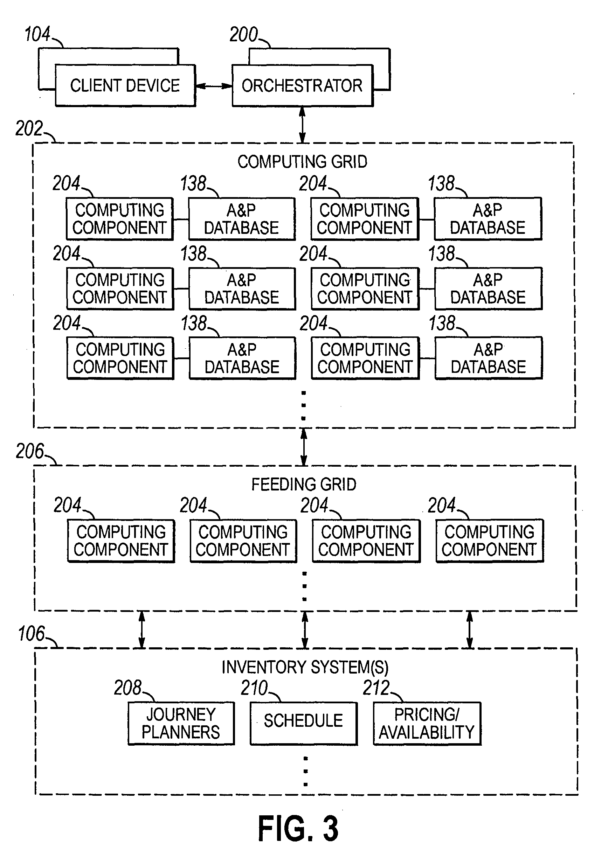

Turning now to Fig. 3, this figure provides a block diagram that illustrates hardware and software components of the reservation system 102, the trip planning module 134, the availability and price module 136, and/or the availability and price database 138. In general, the hardware and software components illustrated in Fig. 3 may be implemented on one or more distributed processing systems (e.g., servers). As shown, one or more client devices 104 may be in communication with an orchestrator 200. In general, an orchestrator 200 may be configured to receive a travel request from a client device 104, determine one or more travel graphs for the travel request, determine/build travel paths corresponding to the received travel request, generate sub-requests based on the travel paths and the travel request, and collect replies to the sub-requests to determine one or more travel solutions that may be communicated to the client device 104. In general, one or more orchestrators 200 may be implemented in hardware and software on a reservation system 102, where each orchestrator 200 may manage a received travel request to thereby facilitate concurrently processing a plurality of travel requests from a plurality of client devices 104.

Each orchestrator 200 may be in communication with a computing grid 202 that may comprise a plurality of computing components 204 connected to a plurality of instances of the availability and price database 138. In general, each computing component 204 may comprise a portion of a distributed processing system (such as a processing thread of a hyper-threaded processing unit, a processing unit of a multi-core processor, etc.), or other such known computing devices, such as a server, a processing node of a multi-nodal data processing system, etc. Each computing component 204 may be connected to an instance of the availability and price database 138 and/or to a processing cluster that comprises one or more instances of the availability and price database 138 that may be shared between some computing components 204. In general, the reservation system 102 may be a distributed processing system that comprises one or more processing units and one or more memory resources such that a plurality of instances of the availability and price database 138 of Fig. 2 may be stored by the reservation system 102 such that concurrent accesses of the availability and price database 138 by computing components 204 of the computing grid 202 may be supported by the reservation system 102. In general, the computing grid 202 may be configured to receive a sub-request from an orchestrator 200, and a computing component 204 of the computing grid 202 may determine pricing and availability for one or more travel inventory items of travel services relevant to the received sub-request by querying an associated instance of the availability and price database 138.

The computing grid 202 is connected to a feeding grid 206 that is comprised of a plurality of computing components 204. As discussed above, the computing components 204 generally comprise a portion of a distributed processing system. The computing components 204 of the feeding grid 206 may be configured to maintain the availability and price database 138 of the reservation system 102 by querying one or more inventory systems 106 of one or more travel merchants to determine up-to-date pricing and availability data for travel inventory items of travel services of the travel merchants. For example, the computing components 204 of the feeding grid 206 may query journey planning systems 208, scheduling systems 210, and/or pricing and availability systems 212 of one or more travel merchants to determine pricing and availability related information for travel inventory items of travel services offered by the travel merchants. The feeding grid 206 may then update the availability and pricing related information stored in the availability and price database 138 based on the pricing and availability information retrieved from the inventory systems 106. In general, FIG. 3 illustrates an example configuration of hardware and software components. Embodiments consistent with the invention may include different configurations of hardware and software components, including for example, more or less computing components 204, more or less instances of the availability and price database 138, more or less orchestrators 200, more or less inventory systems 106 for one or more travel merchants, etc.

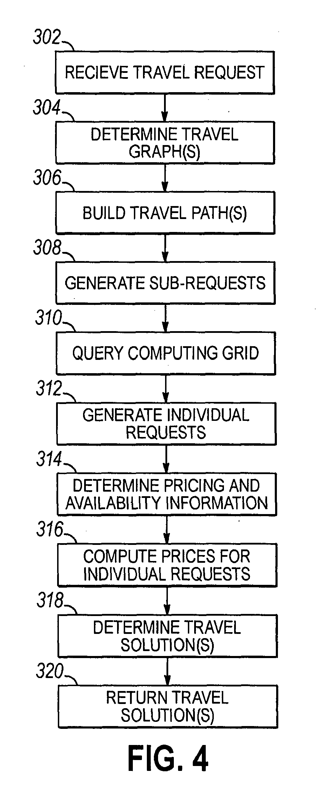

FIG. 4 provides a flowchart 300 that illustrates a sequence of operations that may be performed by a reservation system 102 consistent with embodiments of the invention to determine one or more travel solutions for a received travel request. Consistent with some embodiments of the invention, the travel request may include a plurality of destinations (i.e., multi-destination), and in these embodiments, each travel solution may comprise each destination of the travel request. As illustrated, the reservation system 102 may receive a travel request (block 302) associated with a traveler. The travel request generally includes an origin, one or more destinations, at least one time constraint, and/or traveler preferences. With regard to time constraints, the travel request may indicate a date range in which the traveler wishes to travel, dates at which the traveler desires to be at a particular location, a minimum/maximum number of days that the traveler desires to be at each location, and/or other such time constraints. For example, the travel request may indicate that the traveler wishes to travel in the month of June, and that the entire travel time should be no more than two weeks. As another example, the travel request may indicate that the traveler desires to be in a first destination for at least two days.

Based on the travel request, the reservation system 102 may determine one or more travel graphs that comprise the origin and the one or more destinations (block 304). In general, the travel graphs correspond to routes that begin at the origin and pass through each destination of the travel request. In some embodiments, if the travel request is for a round trip, the travel routes of the travel graphs may return to the origin. Furthermore, embodiments of the invention may determine the one or more travel graphs for the travel request based on travel characteristics of the origin and each destination of the travel request. For example, if an indicated destination is a low-cost travel hub (e.g., an airport through which a low cost airline offers flights), the reservation system may determine travel graphs that utilize such low-cost flight offerings when possible to travel between the origin and the one or more destinations. As another example, if a travel request includes international travel (e.g., an origin and a destination are located in different countries), the reservation system may determine travel graphs that route the travel such that international travel is limited.

Based on the one or more travel graphs and any time constraints, the reservation system 102 may build (i.e., analyze the travel graphs and determine) one or more corresponding travel paths (block 306). In general, a travel path corresponds to a combination of travel services/accommodations (e.g., a flight, rail transportation, hotel accommodations, car rentals, etc.) that fulfill the travel request. After building each travel path, the reservation system 102 generates a sub-request for each travel path (block 308). As described above with respect to FIG. 3, an orchestrator 200 of the reservation system 102 may generate sub-requests that may be communicated to a computing grid 202 for processing. Consistent with embodiments of the invention, for each travel path, the reservation system generates a sub-request that may be used to query the computing grid (block 310). In general, each sub-request includes a travel path, a date range (as provided in the travel request), and any traveler preferences. The computing grid of the reservation system 102 generates one or more individual requests based on each received sub-request (block 312). In general, each individual request is an instance of a sub-request for each possible date in the date range provided in the travel request. Each individual request may be processed by a computing component of the computing grid to determine pricing and availability information (block 314) for travel inventory items of travel services corresponding to the individual request, and the price for each individual request may be determined based on the pricing and availability information of corresponding travel inventory items (block 316).

Based on the determined prices for each individual request, the reservation system may determine one or more travel solutions (block 318). In general, each priced individual request may be considered a candidate travel solution for the travel request, where each individual request includes priced travel inventory items for travel services that fulfill the travel request. Consistent with some embodiments of the invention, the reservation system may sort and filter the candidate travel solutions based on pricing, availability, reservation agent preferences, and/or traveler preferences to thereby determine the one or more travel solutions from the candidate travel solutions. For example, if a traveler prefers air travel to ground travel, the system may filter the candidate travel solutions such that candidate travel solutions including more ground travel may be ignored. As another example, the reservation system may be configured to return the lowest cost options, and in such embodiments, the reservation system may filter a plurality of candidate travel solutions to determine the lowest cost travel solutions from among the plurality as travel solutions for the travel request. The travel solutions may be returned from the reservation system 102 to a client device (block 320), and a user may review and book one of the returned travel solutions.

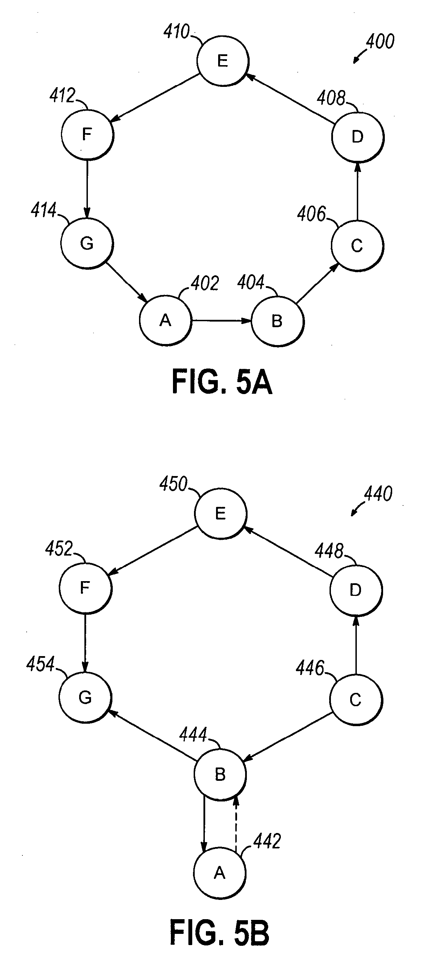

Turning now to FIGS. 5A-G, these figures provide example travel graphs that may be determined for a travel request. In these example travel graphs, a route is planned from an origin location (labeled as 'A') through a plurality of destination locations (e.g., 'B', 'C', ... 'G'). As discussed above, travel graphs may be determined based at least in part on travel characteristics of the origin and the one or more destinations of a travel request. Therefore, the example graphs provided in FIGS. 5A-G reflect types of graphs and graph shapes (i.e., routings between the locations) that may be utilized in some embodiments of the invention. Moreover, the graph shapes may generally be scalable based on the number of destinations included in the travel request. Referring to FIG. 5A, this example travel graph 400 illustrates a circular graph shape - where a travel route starts with the origin 402 (i.e., location 'A') and passes through each destination 404-414 (i.e., locations 'B', 'C', 'D', 'E', 'F', 'G') before returning to the origin 402. In general, a circular graph, such as the example travel graph 400 of FIG. 5A does not consider any pricing/travel advantages that may be gained by taking advantage of return fares, low cost travel hubs, large travel hubs, etc.

FIG. 5B provides an example travel graph 440 that illustrates a racket graph shape - where a travel route starts with the origin 442 (i.e., location 'A'), passes to a first destination 444 (i.e., location 'B'), passes to each remaining destination 446-454 (i.e., locations 'C', 'D', 'E', 'F', 'G') before returning to the first destination 444, and returns to the origin 442 (location A) from the first destination 444 (location B) via a return fare travel service (e.g., a return segment of a round trip flight). In general, the type of graph illustrated in this example may be utilized consistent with embodiments of the invention when considering a travel request that includes international travel. For example, if the origin is Nice, France and the travel request includes destinations in the United States, the first destination may be New York. Travel to the remaining destinations may include domestic flights, rail travel, bus travel, and/or a car rental, and the traveler may return to New York to travel back to Nice, France using the return segment of a round trip ticket between Nice, France and New York.

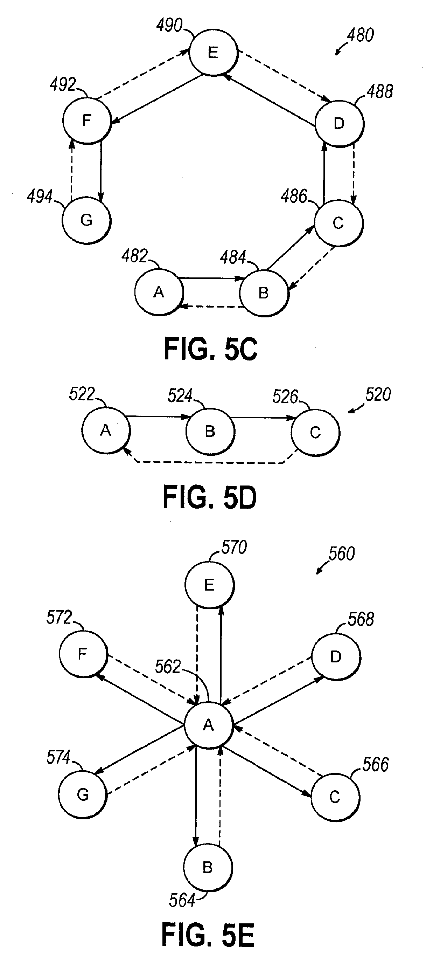

FIG. 5C provides an example travel graph 480 that illustrates an "all the way back graph" shape - where a travel route starts with the origin 482 (i.e., location 'A') passes to each destination 484-494 (locations 'B', 'C', 'D', 'E', 'F', 'G') and returns via return fare travel services from each destination 484-494 to the previous destination 484-494 back to the origin 482. In general, the shape of travel graph illustrated by example in FIG. 5C may be determined to be relevant to a travel request where return fare travel services may be offered between one or more destinations such that return travel segments may be scheduled to facilitate travel to and from one or more destinations.

FIG. 5D provides an example graph that illustrates a graph shape that may be utilized if a travel merchant allows long layovers - where a travel route starts at an origin 522 (location 'A') passes to a first destination 524 (location 'B'), a second destination 526 (location 'C'), then returns to the origin 522. In this example, if an travel merchant's business rules allow a lay-over long enough to allow a traveler to remain in the first destination 524 for a desired amount of time, the travel route of the travel graph may facilitate a round trip travel service that has a lay-over in the first destination 524.

FIG. 5E provides an example travel graph 560 that illustrates a star graph shape-where a travel route starts with the origin 562 (location 'A') passes to each destination 564-574 (locations 'B', 'C', 'D', 'E', 'F', 'G') while using a return fare travel service between the origin 562 and each destination 564-574 such that the traveler returns to the origin 562 after each destination 564-574 and departs for each destination 564-574 from the origin 562. In general, a travel graph such as the example travel graph 560 of Fig. 5E may be utilized if a location (such as the origin) is a low-cost travel hub, a large travel hub, and/or offers lower priced and/or more frequent travel services. In general, embodiments of the invention may determine that a star graph may be useful based on travel characteristics of the origin and/or one or more destinations. In this example, the origin 562 may be a low-cost or large travel hub, such that routing travel through the origin 562 may be desirable and/or cost effective.

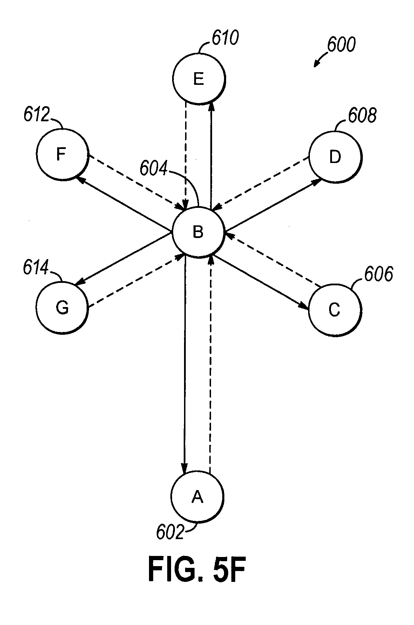

FIG. 5F provides an example travel graph 600 that illustrates an extended star graph shape - where a travel route starts with the origin 602 (location 'A'), passes to a first destination 604 (location 'B'), and passes to each subsequent destination 606-614 (locations 'C', 'D', 'E', 'F', 'G') from the first destination 604 and returns to the first destination 604 before traveling to and each subsequent destination 606-614. In this graph shape, the travel route may use a return fare travel service between the first destination 604 and each subsequent destination 606-614, or the first destination 604 may be a low-cost travel hub, a large travel hub, and/or offer lower priced/more efficient travel services. In general, a travel graph shape such as the example travel graph 600 of FIG. 5F may be utilized if a travel request includes an origin that is not a large travel hub, a low-cost travel hub, etc. or if the travel request includes international travel from an origin to a plurality of destinations, where the destinations may be located in a common region or country. For example, referring to the example travel graph 600 of FIG. 5F, if the origin 602 is Nice, France, the first destination 604 is New York, and the other destinations 606-614 are located in the United States, the example travel graph may facilitate determining travel solutions that utilize New York as a hub for domestic travel to the remaining destinations.

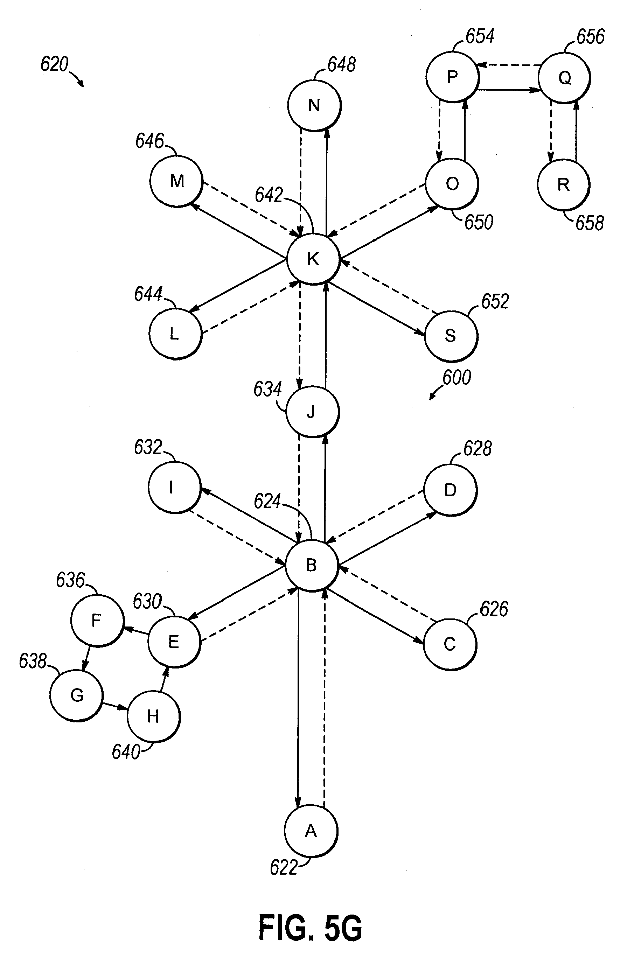

FIG. 5G provides an example travel graph 620 that illustrates a mixed graph shape (i.e., a combination of some of the graph shapes illustrated in FIGS. 5A-F). As generally illustrated by the example travel graph 620, consistent with embodiments of the invention, one or more travel graphs determined for a travel request may be combinations of the various types/shapes of travel graphs generally described herein. As discussed previously, the type/shape of at least a portion of a travel graph determined for a travel request may be based at least in part on travel characteristics of the origin and/or one or more destinations of the travel request. As shown in FIG. 5G, a travel route represented by the travel graph starts at an origin 622 (location 'A'), and an extended star graph type is included using a first destination 624 (location 'B') as a hub for travel to and from a plurality of destinations 626-634 (locations 'C', 'D', 'E', 'I', 'J'). At a fourth destination 630 (location E), the travel graph includes a circular travel graph shape beginning at the fourth destination 630 (location E) and passing through a plurality of destinations 636-640 (locations 'F', 'G', 'H') before returning to the fourth destination 630 (location E), and then returning to the first destination 624 (location B). Hence, the circular type graph comprising locations E, F, G, and H 630, 636-640 included in the example travel graph may, for example, be determined for a part of a determined travel graph if a group of locations are in close proximity and a rental car may be rented for travel between each location of the group.

As shown, once the travel route returns to the first destination 624 (location B) after the circular graph route for locations E, F, G, H, 630, 626-640 the route continues to the remaining locations 632, 634 (locations I, J) of the extended star graph portion. As shown, the last destination 634 (location J) of the extended star graph portion may be connected to a second extended star graph portion with a tenth destination 642 (location 'K') as a hub for travel to and from a plurality of locations 644-652 (locations 'L', 'M', 'N', 'O', 'S'). Furthermore, at a fourteenth destination 650 (location 'O'), an all the way back graph shape may start at the fourteenth destination (location 'O') and the route may pass to three further destinations 654-658 (locations 'P', 'Q', 'R') and utilize return fare travel services to return to the fourteenth destination (location 'O').

As illustrated by the example in FIG. 5G, a travel graph determined for a travel request may be a combination of various types of graph shapes, where such combinations may be made based at least in part on travel characteristics of the origin and the one or more destinations. Travel characteristics of the origin and one or more destinations generally includes: whether a location is a low-cost travel hub, whether a location is a large travel hub, whether a location requires international travel relative to other locations of the travel request, proximity of one or more locations to one or more other locations, travel merchants that provide travel services at or near the location, types of travel services offered at a location (e.g., presence of airports, rail stations, etc.), and/or other such characteristics that may be considered for travel planning.

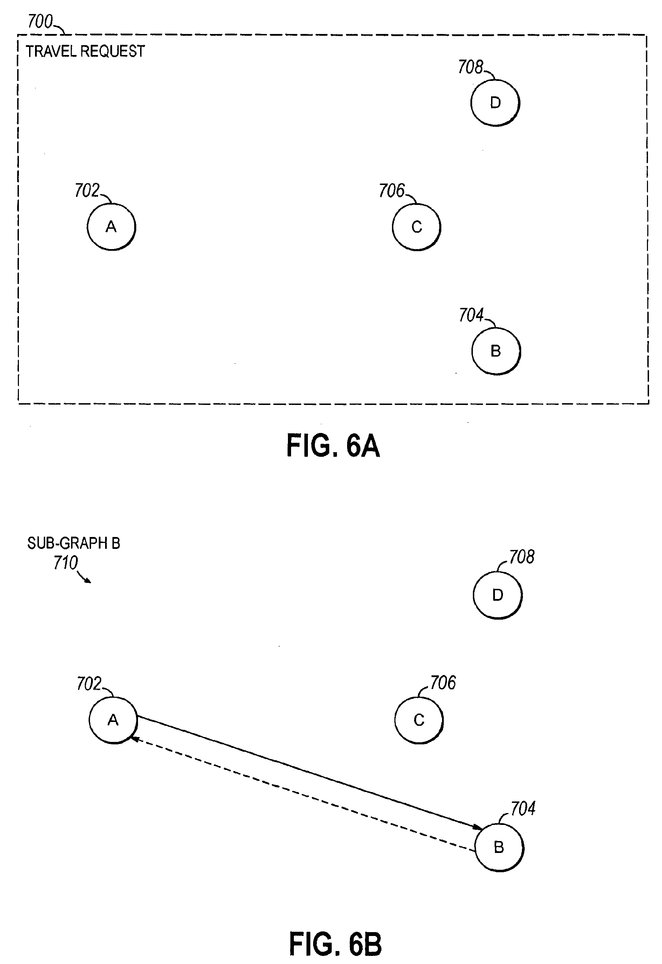

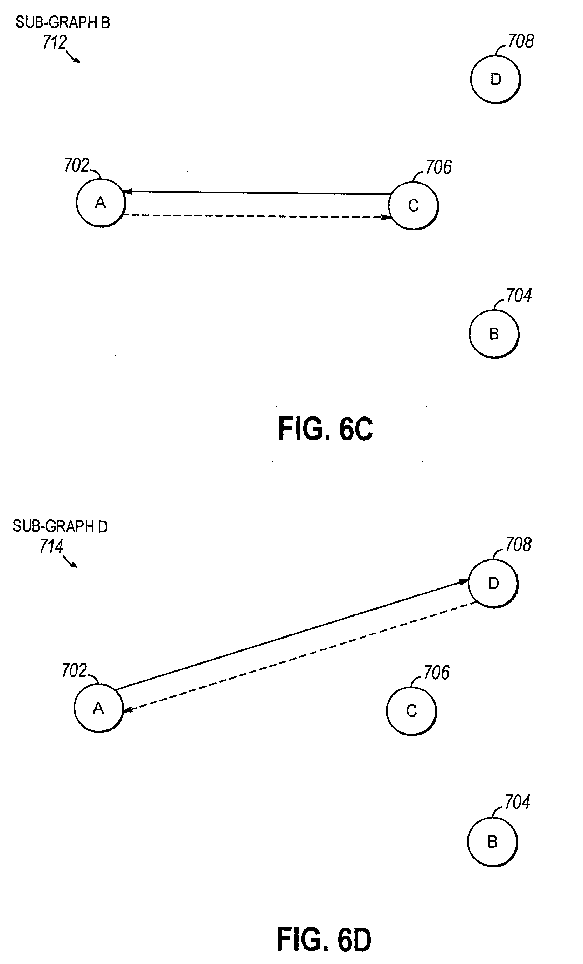

Turning now to FIGS. 6A-6M, these figures provide an example that illustrates determining travel graphs for a travel request consistent with embodiments of the invention. FIG. 6A provides an illustration of an example travel request 700, where the travel request comprises an origin 702 (location 'A'), and three destinations 704-708 (locations 'B', 'C', 'D'). For the example, the origin 702 (location A) is an international airport and that the location B destination 704 is a low cost hub for travel services to and from the location C destination 706. As shown in FIGS. 6B-6D, because the origin 702 is an international airport (and international travel is needed between the origin and any of the destinations 704-708), round trip travel may be considered from the origin 702 to the location B destination 704 (i.e., 'SUB-GRAPH B' 710 of FIG. 6B), the location C destination 706 (i.e., 'SUB-GRAPH C' 712 of FIG. 6C), and the location D destination 708 (i.e., 'SUB-GRAPH D' 714 of FIG. 6D). Each of the return trip possibilities may be considered a sub-graph 710-714 from which possible travel graphs relevant to the travel request may be determined.

In general, one or more travel graphs may be determined based on each sub-graph. In this example, three possible routes may be made between the origin 702 and the destinations 704-708 as shown in the sub-graphs 710-714 of FIGS. 6B-D. Embodiments of the invention may then analyze routing possibilities between the three destinations 704-708 to determine travel graphs for the travel request. As discussed previously, the routing possibilities that are selected in determining travel graphs for the travel request may be based at least in part on travel characteristics of the origin and one or more destinations. Hence, in this example, the low-cost travel services offered between the location B destination 704 and the location C destination 706 may result in the selection of one or more graph shapes to analyze when determining travel graphs for the travel request.

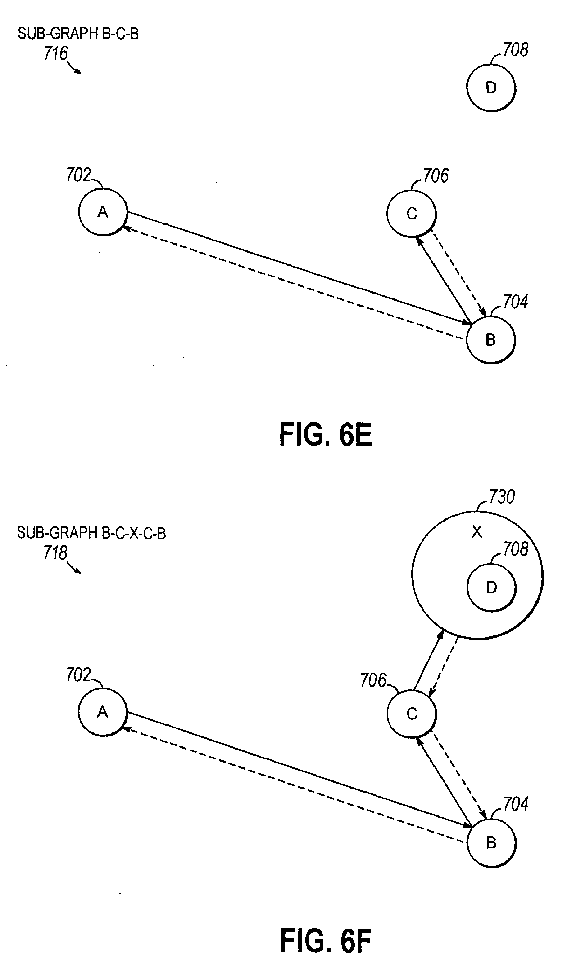

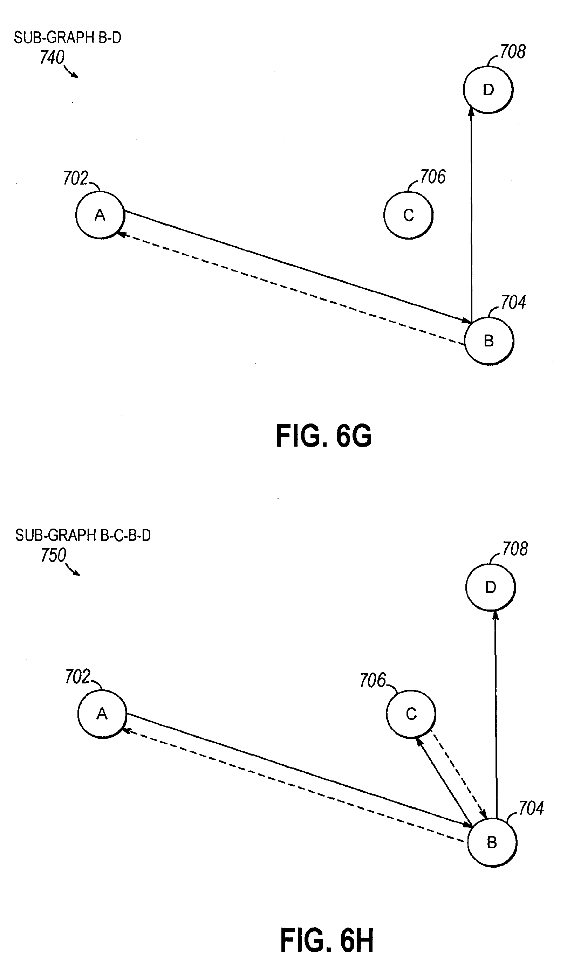

FIGS. 6E-M illustrate an example analysis performed by systems consistent with embodiments of the invention to determine travel graphs based at least in part on the analysis of the sub-graph starting at the location B destination 704 (i.e., sub-graph B 710 shown in FIG. 6B). Turning now to FIG. 6E, as discussed, low cost travel services are offered between location B and location C, therefore a graph shape that considers low-cost travel services may be implemented between location B 704 and location C 706 as shown in a sub-graph (labeled 'SUB-GRAPH B-C-B' 716) of FIG. 6E. Similarly, FIG. 6F reflects another sub-graph (labeled 'SUB-GRAPH B-C-X-C-B') 718 , where after routing to location C 706, the route may further connect to another graph shape/destination (labeled as 'X' in this example) 730 before returning to location B 704 via a return fare travel service. FIG. 6G provides an illustrated example of a sub-graph (labeled 'SUB-GRAPH B-D') 740 based on the travel/return routing from the origin 702 to the location B destination 704 (i.e., sub-graph B 710 of FIG. 6B) that further includes a route from the location B destination 704 to the location D destination 708. In this example, travel characteristics for the location B destination 704 and the location D destination 708 indicate that no low-cost travel services or return fare travel services are available therebetween. Therefore, the route between the location B destination 704 and the location D destination 708 is a simple one-way connection.

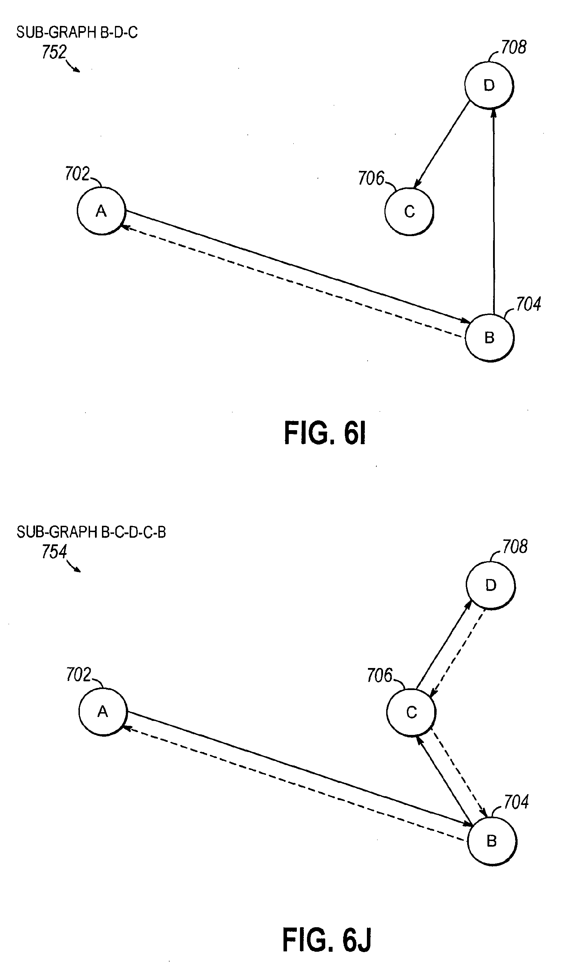

The example sub-graphs 716, 718, 740 illustrated in FIGS. 6E-G may be further analyzed by the reservation system 102 to determine possible routes between the destinations 704-708 based on travel characteristics of the destinations 704-708. FIG. 6H provides an example sub-graph (labeled as 'SUB-GRAPH B-C-B-D') 750 that further analyzes possible routes based on the sub-graph B-C-B 716 of FIG. 6E. As discussed above, the travel characteristics of location B 704 and location D 708 do not indicate any advantageous routings therebetween (i.e., low cost travel services, return fare travel services, etc.), therefore, a simple connection from location B 704 to location D 708 is included. FIG. 6I provides an example sub-graph (labeled 'SUB-GRAPH B-D-C) 752 that is based on the sub-graph B-D 740 of FIG. 6G. In the sub-graph B-D-C 752, since the travel characteristics of location C 706 and location D 708 do not indicate any advantageous travel services therebetween (e.g., low cost travel services, large hub travel services, return fare travel services, etc.), hence, the sub-graph B-D-C 752 includes a simple connection between location D 708 and location C 706. FIG. 6J provides an example sub-graph 754 (labeled 'SUB-GRAPH B-C-D-C-B') that is based on the sub-graph B-C-X-C-B 718 of FIG. 6F. In this sub-graph 754, the only remaining location that needs to be connected from the sub-graph 718 of FIG. 6F is location D 708. Furthermore, the sub-graph 754 includes a return route from location D 708 to location C 706 because of the low-cost travel services between location C 706 and location B 704.

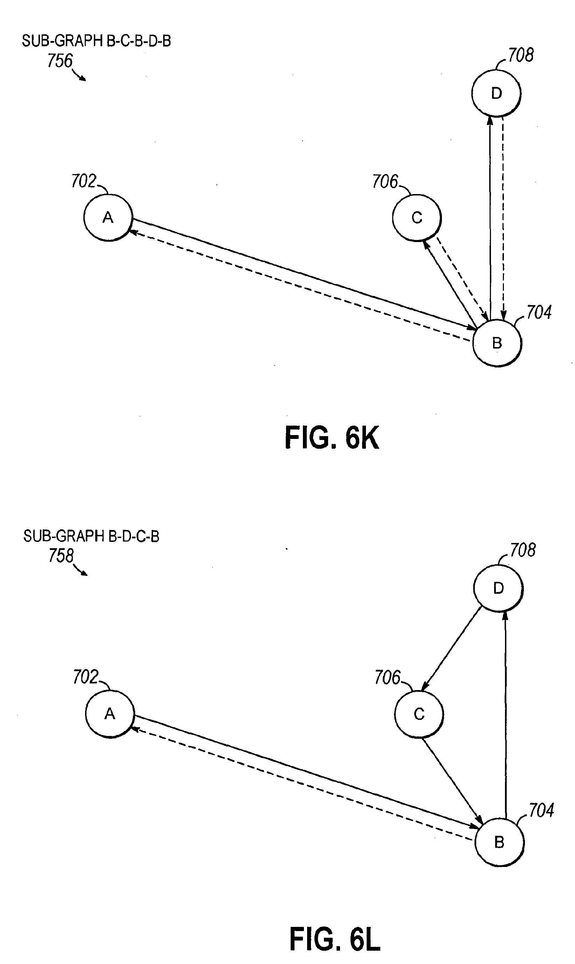

In general, once sub-graphs that route to each destination have been built, embodiments of the invention may build sub-graphs that route back to the virtual starting point (i.e., for sub-graphs based on sub-graph B of FIG. 6B, connections are implemented on any sub-graph that does not route to location B 704). For example, referring to FIG. 6K, this figure provides an example sub-graph 756 (labeled 'SUB-GRAPH B-C-B-D-B') that is based on sub-graph B-C-B-D 750 of FIG. 6H. As shown, a return connection is implemented from location D 708 to location B 704 such that the sub-graph 756 comprises a route that returns to location B 704 after travel to all other destinations 706, 708 such that a return fare travel service may be utilized between location B 704 and the origin 702 (i.e., location A). Similarly, FIG. 6L provides an example sub-graph 758 that is based on sub-graph B-D-C 752 of FIG. 6I. As shown, a return connection is implemented from location C 706 to location B 704 such that the sub-graph 758 comprises a route that returns to location B 704 after travel to all other destinations 706, 708 such that a return fare travel service may be utilized between location B 704 and the origin 702 (i.e., location A).

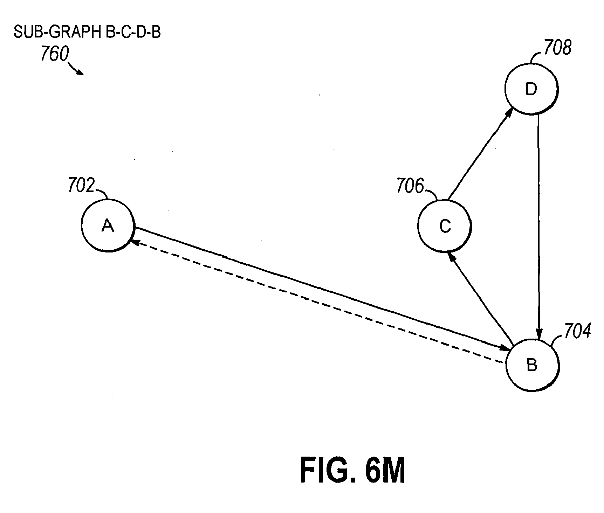

Finally, embodiments of the invention may determine standard sub-graphs, where such standard sub-graphs may comprise a circular graph shape with a route that passes through each destination 704-708. FIG. 6M provides a standard sub-graph 760 (labeled 'B-C-D-C) that may be determined by embodiments of the invention. In addition, another standard sub-graph may be generated that is the same sub-graph as is shown in FIG. 6L. Consistent with some embodiments of the invention, some sub-graphs having the same route may be determined when analyzing each possible routing between locations with different graph shapes and travel characteristics. Such duplicate sub-graphs may be discarded. Therefore, related to the sub-graphs determined for the example, for the sub-graph B 710 of FIG. 6B, the following travel graphs may be determined, where the letters indicate the location and the order indicates the travel route: A-B-C-D-B-A (based on sub-graph 760 of FIG. 6M); A-B-D-C-B-A (based on sub-graph 758 of FIG. 6L); A-B-C-B-D-B-A (based on sub-graph 756 of FIG. 6K); and A-B-C-D-C-B-A (based on sub-graph 754 of FIG. 6J). Similar travel graphs may be determined by analyzing sub-graph C of FIG. 6C and sub-graph D of FIG. 6D. Furthermore, travel graphs may be determined based on the racket graph shape of FIG. 5B (because travel to and from the origin would be international). Embodiments of the invention may determine the following travel graphs (i.e., standard graphs) using a circular graph shape: A-B-C-D-A; A-B-D-C-A; A-C-B-D-A; A-C-D-B-A; A-D-B-C-A; and A-D-C-B-A. In general, such standard travel graphs may be determined when travel characteristics and/or user preferences allow car travel (i.e., a rental car travel service) between two or more destinations.

While the examples provided in FIGS. 6A-M illustrate determining travel graphs based on the origin and one or more destinations of a travel request, some embodiments of the invention may store at least a portion of graphs associated with commonly traveled to/from locations. For example, in some embodiments of the invention, a portion of a travel graph that includes routes between New York, Chicago, and Boston may be stored and accessible by the orchestrator of the reservation system 102 when determining travel graphs such that if a travel request including New York, Chicago, and Boston is received, the reservation system 102 may determine travel graphs using the pre-computed portion.

As illustrated by the examples, consistent with embodiments of the invention, the reservation system 102 implementing the orchestrator 200 may determine travel graphs based on graph shapes (such as those provided in FIGS. 5A-5G or others defined by the reservation system) and/or travel characteristics of an origin and one or more destinations included in a received travel request. Based on the determined travel graphs, the orchestrator 200 of the reservation system 102 may build one or more travel paths, which in turn may be used to generate one or more sub-requests based on the travel paths to be processed by computing components of the computing grid of the reservation system 102. The computing grid may analyze each sub-request and compute individual requests based on the travel graphs and any time constraints of the travel request, and each individual request may be priced by a computing component of the computing grid.

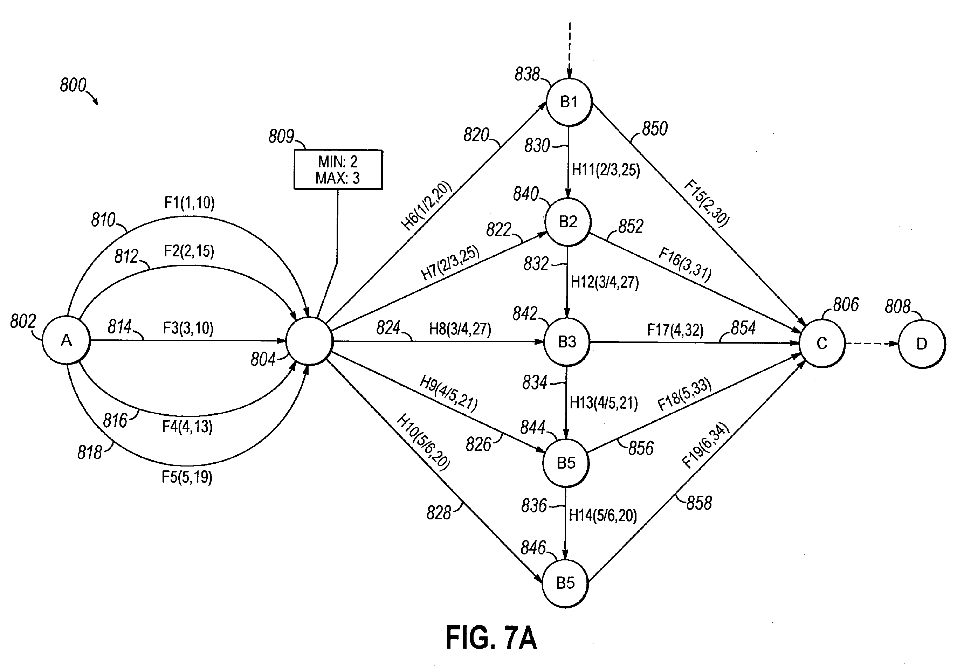

Turning now to FIGS. 7A-D, these figures provide example illustrations that implement hotel and car rental options into a travel graph. In this example, relative dates as well as minimum and maximum stay time constraints may be included such that travel paths may be determined using the travel graph. FIG. 7A provides an example travel graph 800, that comprises an origin 802 (location 'A'), and three destinations 804-808 (locations 'B', 'C', 'D'). In this example, time constraints for a minimum stay and a maximum stay 809 are associated with the location B destination 804 (i.e., a minimum stay of 2 days and a maximum stay of 3 days). In this example, flights 810-818 (labeled 'F1', 'F2', 'F3', 'F4', 'F5' respectively) may be offered from the origin 802 to the location B destination. Each flight 810-818 includes a date of service and a price: 'F1(1, 10)' indicates that the flight F1 810 is offered on date 1 for a cost of 10; 'F2(2, 15)' indicates that the flight F2 812 is offered on date 2 for a cost of 15; 'F3(3, 10)' indicates that the flight F3 814 is offered on date 3 for a cost of 10; 'F4(4, 13)' indicates that the flight F4 816 is offered on date 4 for a cost of 13; and 'F5(5, 19)' indicates that the flight F5 818 is offered on date 5 for a cost of 19.

Furthermore, the example indicates that hotel accommodations will be required at the location B destination 804. Therefore, based on the departure date of the flight from the origin 802 to the location B destination 804 and the length of stay (keeping in mind the minimum and maximum stay 809), different prices and availability may be considered. In this example, hotel accommodations 820-836 (labeled 'H6', 'H7', 'H8', 'H9', 'H10', 'H11', 'H12', 'H13', and 'H14' respectively) may be provided at the location B destination 804. Each hotel accommodation 820-836 includes a date of service and a price: 'H6(1/2, 20)' indicates that the hotel accommodation is for the night of date 1 to the morning of date 2 for a price of 20; 'H7(2/3,25)' indicates that the hotel accommodation is for the night of date 2 to the morning of date 3 for a price of 25; 'H8(3/4, 27)' indicates that the hotel accommodation is for the night of date 3 to the morning of date 4 for a price of 27; 'H9(4/5, 21)' indicates that the hotel accommodation is for the night of date 4 to the morning of date 5 for a price of 21; 'H10(5/6, 20)' indicates that the hotel accommodation is for the night of date 5 to the morning of date 6 for a price of 20; 'H11(2/3, 25)' indicates that the hotel accommodation is for the night of date 2 to the morning of date 3 for a price of 25; 'H12(3/4, 27)' indicates that the hotel accommodation is for the night of date 3 to the morning of date 4 for a price of 27; 'H13(4/5, 21)' indicates that the hotel accommodation is for the night of date 4 to the morning of date 5 for a price of 21; and 'H14(5/6, 20)' indicates that the hotel accommodation is for the night of date 5 to the morning of date 6 for a price of 20.

Based on the dates for travel from the origin 802 to the location B destination 804 and the hotel accommodations, the path may comprise different flights 850-858 (labeled 'F15', 'F16', 'F17', 'F18', and 'F19' respectively). Each flight 850-858 between the location B destination 804 and the location C destination 806 includes a date of service and a price: 'F15(2, 30)' indicates that the flight F15 850 is offered on date 2 for a cost of 30; 'F16(3, 31)' indicates that the flight F16 852 is offered on date 3 for a cost of 31; 'F17(4, 39)' indicates that the flight F17 854 is offered on date 4 for a cost of 39; 'F18(5, 33)' indicates that the flight F18 856 is offered on date 5 for a cost of 33; and 'F19(6, 36)' indicates that the flight F19 858 is offered on date 6 for a cost of 36.

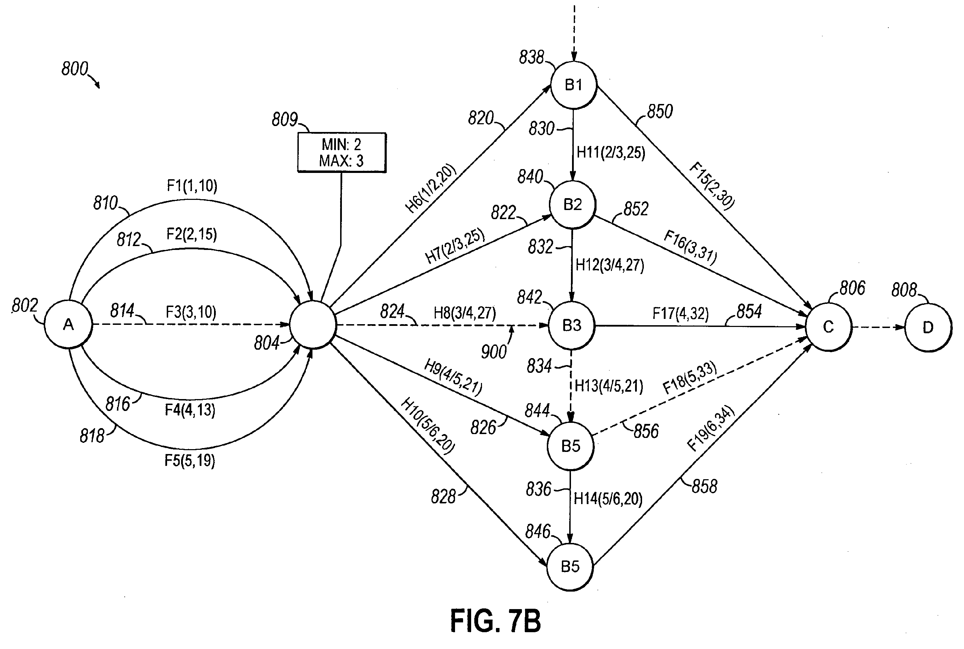

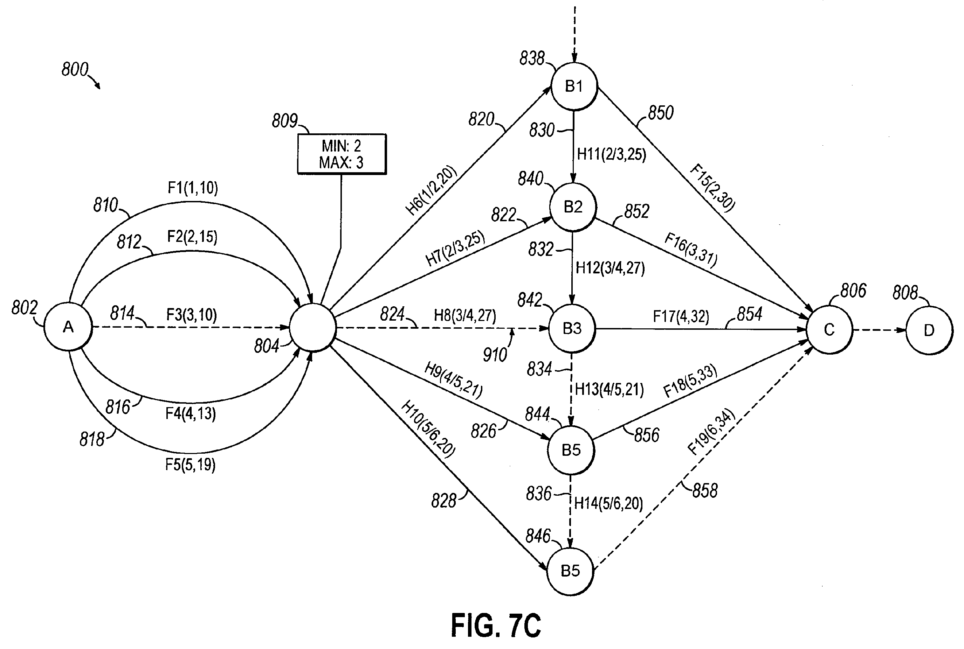

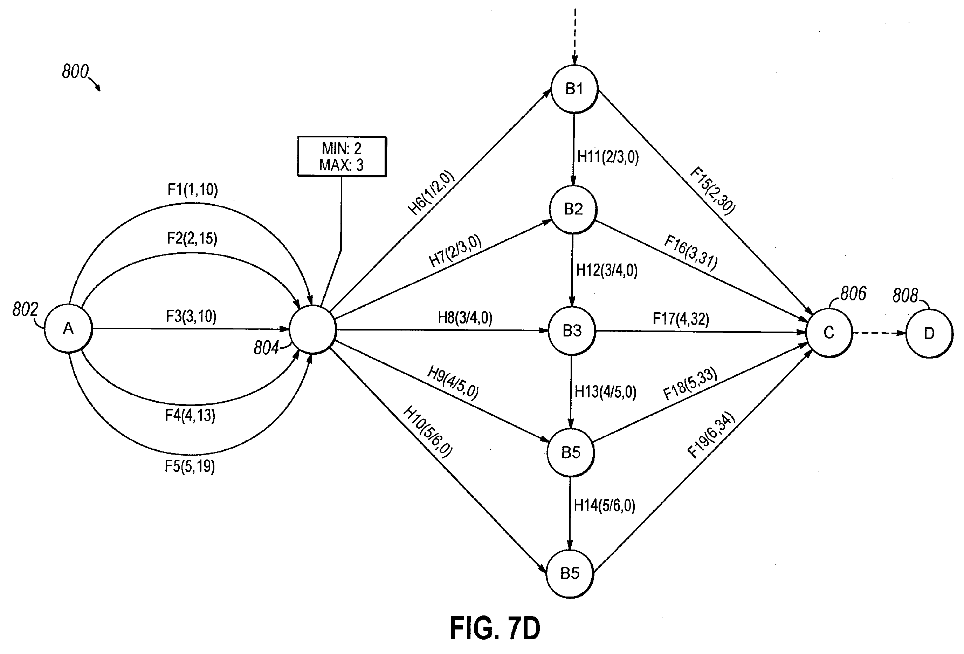

FIG. 7B illustrates the travel graph 800 of FIG. 7A with a determined travel path 900 (illustrated with a dashed line). In this example, the travel path comprises flight F3 814, hotel accommodations H8 824 and H13 834, and flight F18 856. Based on the included values for each selected travel service of the travel path 900, the cost may be calculated as: (F3 + H8 + H13 + F18) = 10 + 27 + 21 + 33 = 91. Similarly, FIG. 7C illustrates the travel graph 800 of FIG. 7A with a determined path 910 (illustrated with a dashed line). In this example, the travel path comprises flight F3 814, hotel accommodations H8 824, H13 834, H14 836, and flight F19 858. Based on the included cost values for each selected travel service of the travel path 910, the cost may be calculated as: (F3 + H8 + H13 + H14 + F19) = 10 + 27 + 21 + 20 +36 = 114. FIG. 7D illustrates the travel graph 800 of FIG. 7A where the cost of the hotel accommodations has been adjusted to zero because a hotel accommodation is not required.

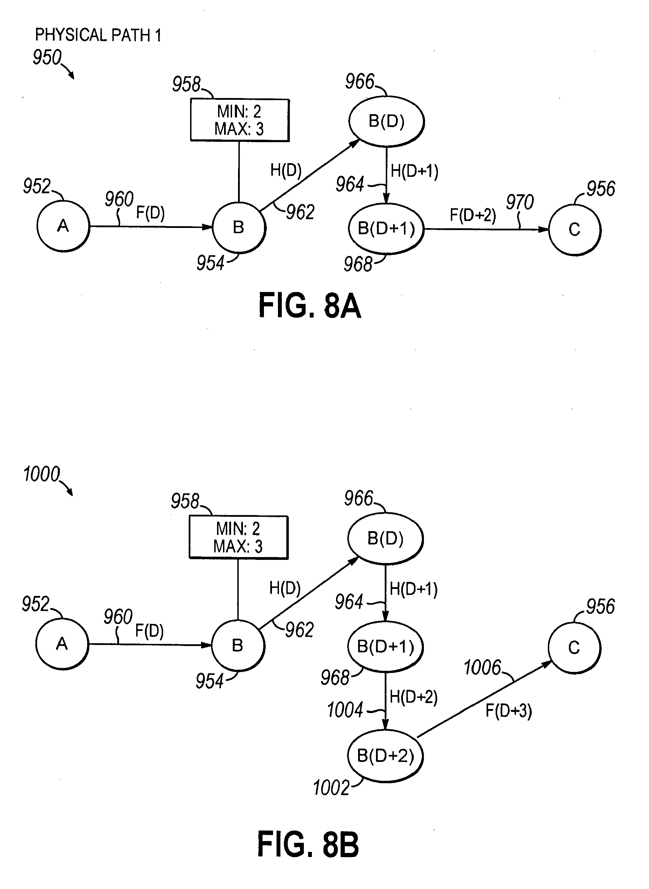

As illustrated in the example provided in FIGS. 7A-D, a travel path may be determined based at least in part on a travel graph and one or more time constraints of a travel request. In general, a travel path is a combination of travel services that fulfills the travel request but does not necessarily take into consideration a specific date but rather generally comprises relative dates such that travel services may be scheduled appropriately. FIGS. 8A-B provide example travel paths that may be determined based on a travel graph for a travel request. FIG. 8A illustrates a travel path 950 that may be determined for a travel request that includes an origin (location 'A') 952, a first destination (location 'B') 954, and a second destination (location 'C') 956. As shown, a minimum stay and maximum stay time constraints 958 are associated with the location B destination 954. The travel path 950 includes a flight 'F(D)' 960 that indicates that the flight 'F' occurs on date 'D' from the origin 952 to the location B destination 954. Based on the minimum stay requirement 958 for the location B destination 954, the travel path includes two days of hotel accommodations: 'H(D)' 962 for a hotel stay 'H' on date 'D'; and 'H(D+1)' 964 for a hotel stay on date 'D+1'. The travel path remains in the location B destination 954 at 'B(D)' 966 for date D due to the first hotel accommodation H(D) 962, and the travel path remains in the location B destination 954 at 'B(D+1)' 968 due to the second hotel accommodation H(D+1) 964. After the second night stay in the location B destination (i.e., B(D+1) 968), a flight 'F(D+2)' 970 is implemented on date D+2 for travel between the location B destination 954 and the location C destination 956. The travel path 950 illustrated in FIG. 8A may be described as: A-B-B1-C.

FIG. 8B illustrates a travel path 1000 that may be determined for the travel request that includes the origin 952, the location B destination 954, and the location C destination 956 that includes the same minimum stay and maximum stay time constraint 958. As compared to the travel path 950 of FIG. 8A, this travel path 1000 includes an additional stay in the location B destination 954 (i.e., 'B(D+2)' 1002) due to the hotel accommodation 'H(D+2)' 1004. Because of the additional stay in the location B destination 954, the travel path 1000 includes a flight 'F(D+3)' 1006 from the location B destination 954 to the location C destination 956. The travel path 1000 illustrated in FIG. 8B may be described as: A-B-B1-B2-C.

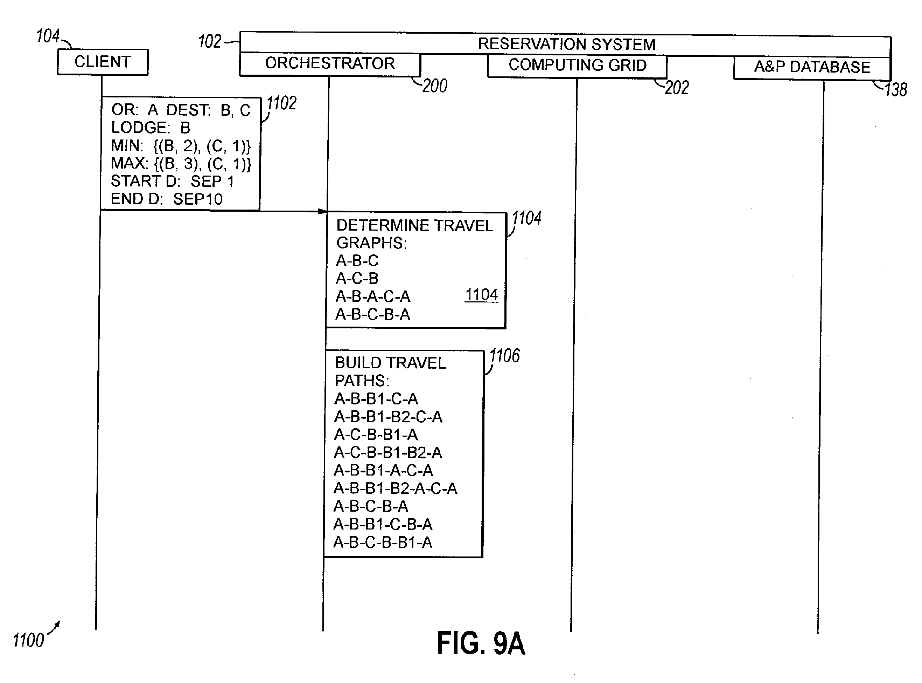

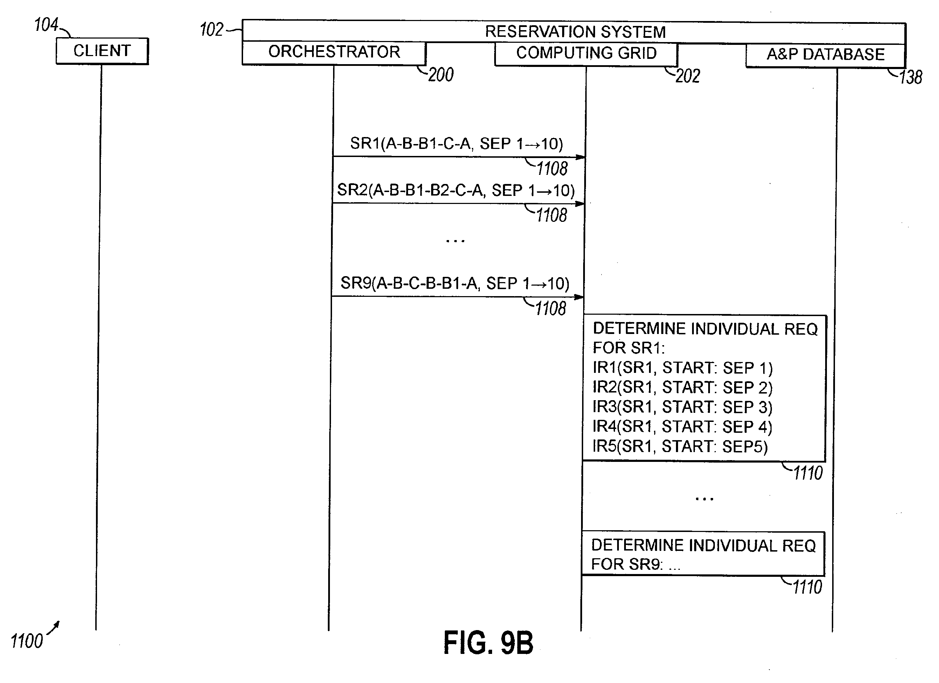

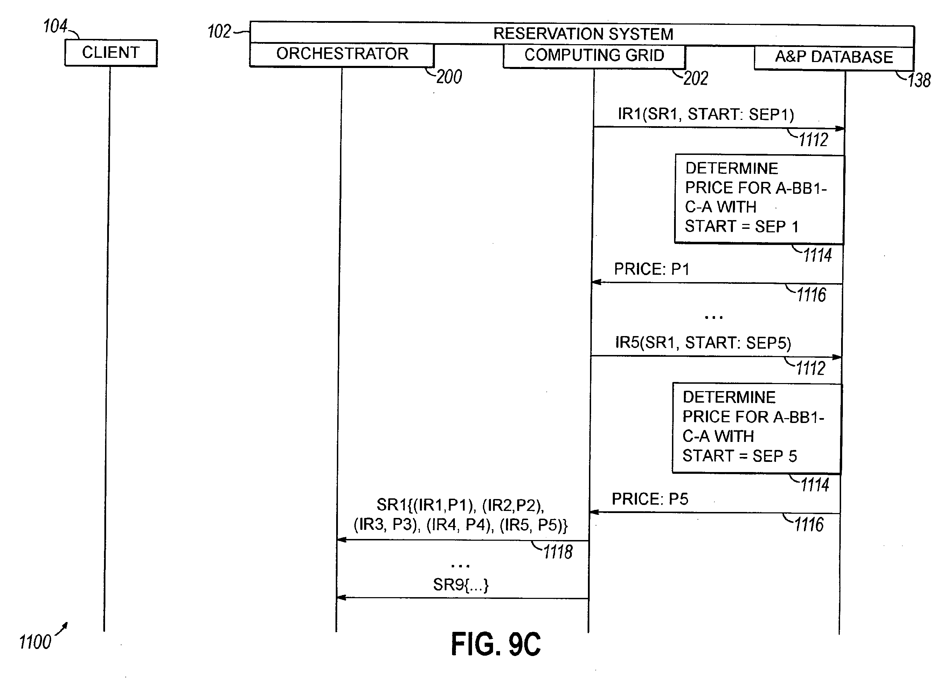

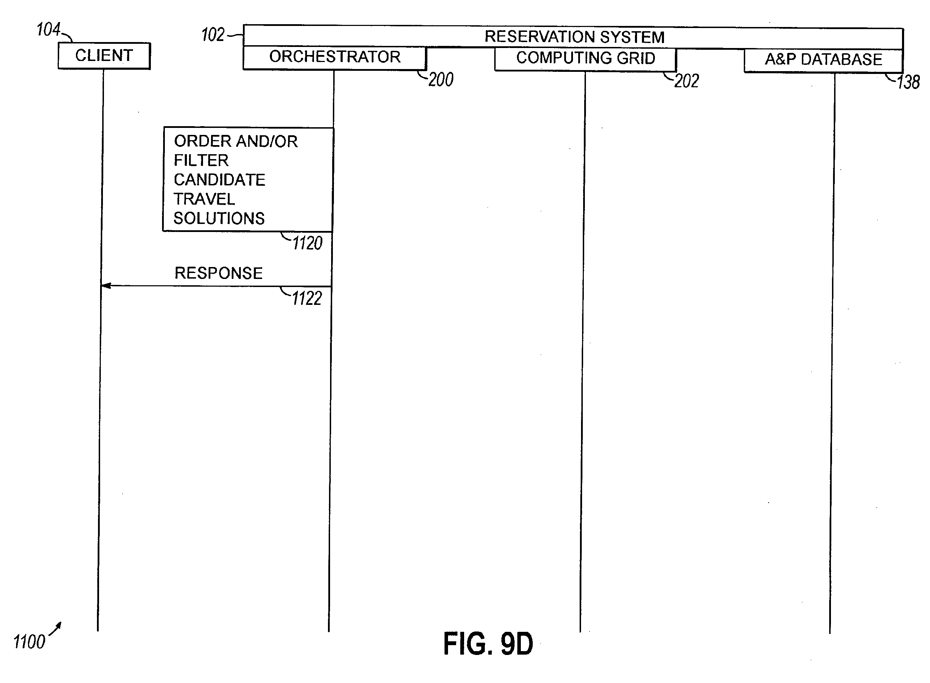

FIGS. 9A-D provides an example sequence diagram 1100 that illustrates operations that may be performed consistent with some embodiments of the invention by a reservation system 102 to determine one or more travel solutions for a travel request received from a client device 104. In this example, the reservation system 102 may receive a travel request 1102 that indicates: an origin of location A; destinations of locations B and C; minimum stay requirements of 2 days for location B and 1 day for location C; maximum stay requirements of 3 days for location B and 1 day for location C; a start date of September 1; and an end date of September 10. The orchestrator 200 of the reservation system 102 may determine one or more travel graphs for the travel request (block 1104). In this example, the travel graphs include: A-B-C; A-C-B; A-B-A-C-A; and A-B-C-B-A. Based on the determined travel graphs, the orchestrator 200 may build one or more travel paths (block 1106). In this example, the travel paths include: A-B-B1-C-A, A-B-B1-B2-C-A, A-C-B-B1-A, A-C-B-B1-B2-A, A-B-B1-A-C-A, A-B-B1-A-C-A, A-B-B1-B2-A-C-A, A-B-C-B-A, A-B-B1-C-B-A, A-B-C-B-B1-A. As illustrated by the example, some travel paths built for a travel request may include nonconsecutive stays in a particular location. For example, the travel path A-B-B1-C-B-A includes two nights in the location B destination, followed by travel to the location C destination, and a return to the B destination for an additional night.

Based on the travel paths, the orchestrator 200 determines at least one sub-request for each travel path that may be communicated to the computing grid 202 for processing (block 1108). For example, the orchestrator may determine a sub-request for the travel path A-B-B1-C-A to be 'SR1(A-B-B1-C-A, SEP 1 → 10), the sub-request for the travel path A-B-B1-B2-C-A to be 'SR2(A-B-B1-B2-C-A, SEP 1 → 10), etc. The computing grid 202 may receive each sub-request and determine one or more individual requests for each received sub-request (block 1110). For example, with regard to the SR1 sub-request, the computing grid 202 may determine individual requests: 'IR1(SR1, START: SEP 1)', 'IR2 (SR1, START SEP: 2)', 'IR3 (SR1, START SEP: 3)', 'IR4 (SR1, START SEP: 4)', and 'IR5 (SR1, START SEP: 5)'. In general, an individual sub-request may be determined for each possible start date of a sub-request. Individual requests may similarly be determined for the other received sub-requests. The computing grid 202 may query the availability and price database 138 with the individual requests 1112, and the computing grid 202 may determine a price for each individual request (block 1114) and return the prices 1116 to a computing component of the computing grid 202 from which the individual request originated. Priced individual requests 1118, which may be referred to as candidate travel solutions, may be returned to the orchestrator 200. The orchestrator may order and/or filter the received candidate travel solutions (block 1120) based at least in part on price (e.g., minimum price ordering), traveler preferences (e.g., ordering and/or filtering based on preferences of the traveler), business rules (e.g., preferring types of travel, particular travel merchants, etc.), and/or other such types of rules that may be implemented for the system to dynamically order and/or filter the candidate travel solutions to thereby determine travel solutions corresponding to the travel request. After ordering and/or filtering the candidate travel solutions to determine the travel solutions for the travel request, the reservation system 102 may communicate a response 1122 to the client device 104.

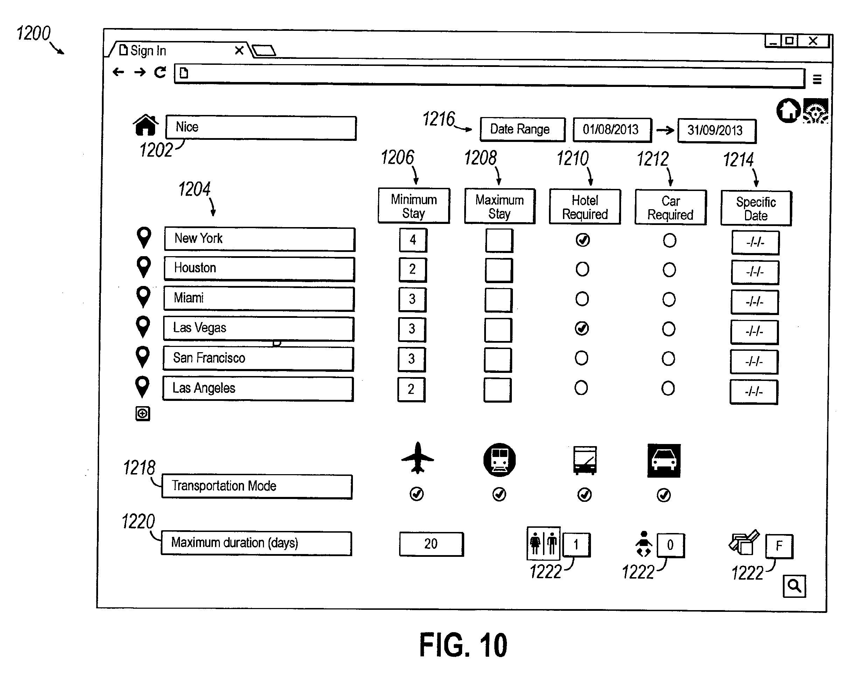

FIG. 10 provides an example illustration of a graphical user interface 1200 that may be generated by the reservation system 102 and accessible by a client device 104 such that a user (e.g., traveler, travel agent, etc.) may input information via the graphical user interface 1200. In general, the client device 104 may access the graphical user interface 1200 via the communication network 103, such as by navigating to an internet address at which the reservation server 102 provides the graphical user interface 1200. As another example, the graphical user interface 1200 may be a dedicated interface between a client device 104 and the reservation system for a travel agency. As shown, the graphical user interface 1200 may allow a user to input data that indicates: an origin location 1202, one or more destinations 1204, a minimum stay time constraint for each destination 1206, a maximum stay time constraint for each destination 1208, whether a hotel accommodation is needed for each destination 1210, whether a car rental is needed for each destination 1212, any specific dates that the traveler requires to be in a specific destination 1214, a date range in which travel should be completed 1216, preferred modes of transportation 1218, a maximum duration for the travel 1220, information about the traveler 1222, and/or other such information that may be used to determine one or more travel solutions consistent with embodiments of the invention. After inputting relevant information via the graphical user interface 1200, the user may submit the information to thereby generate a travel request based at least in part on the input information.

In general, the routines executed to implement the embodiments of the invention, whether implemented as part of an operating system or a specific application, component, program, object, module or sequence of instructions, or even a subset thereof, will be referred to herein as "computer program code," or simply "program code." Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution.

The program code embodied in any of the applications/modules described herein is capable of being individually or collectively distributed as a program product in a variety of different forms. In particular, the program code may be distributed using a computer readable media, which may include computer readable storage media and communication media. Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

These computer program instructions may also be stored in a computer readable medium that can direct a computer, other types of programmable data processing apparatus, or other devices to function in a particular manner, such that the instructions stored in the computer readable medium produce an article of manufacture including instructions that implement the function/act specified in the block or blocks of the flowchart and/or block diagram.

The computer program instructions may also be loaded onto a computer, other programmable data processing apparatus, or another device to cause a series of computations to be performed on the computer, the other processing apparatus, or the other device to produce a computer implemented process such that the executed instructions provide one or more processes for implementing the functions/acts specified in the flowchart and/or block diagram block or blocks.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising."

While all of the present invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A method for determining at least one travel solution, the method comprising:
receiving a travel request that indicates an origin, at least one destination, and at least one time constraint;
building, with at least one processor, a plurality of travel paths comprising the origin and the at least one destination based at least in part on the at least one time constraint;
determining at least one candidate travel solution for each travel path based at least in part on the at least one time constraint; and
determining, with the at least one processor, at least one travel solution for the travel request based at least in part on pricing and availability for the at least one candidate travel solution for each travel path.

2. The method of claim 1, wherein building, with the at least one processor, the plurality of travel paths comprising the origin and the at least one destination based at least in part on the at least one time constraint comprises:
determining at least one travel graph for the origin and the at least one destination based at least in part on a travel characteristic of the at least one destination,
wherein the plurality of travel paths are built based at least in part on the at least one travel graph.

3. The method of claim 2, wherein determining the at least one travel graph for the origin and the at least one destination based at least in part on the travel characteristic of the at least one destination comprises:
determining whether the at least one destination offers low cost travel services; and
determining at least one travel graph shape associated with a low cost travel hub for the at least one destination.

4. The method of claim 2 or claim 3, wherein at least one travel characteristic of the at least one destination includes a low cost travel hub, an international travel hub, a return fare travel hub, a long layover travel hub, or any combination thereof.

5. The method of any of the preceding claims, wherein determining the at least one candidate travel solution for each travel path based at least in part on the at least one time constraint comprises:
determining the pricing and the availability for a plurality of travel inventory items of travel services corresponding to each travel path,
wherein the at least one candidate travel solution for each travel path is based at least in part on the pricing and the availability for the plurality of travel inventory items corresponding to each travel path.

6. The method of claim 5, wherein determining the pricing and the availability for the plurality of travel inventory items corresponding to each travel path comprises:
generating at least one sub-request for each travel path based at least in part on the at least one time constraint; and
querying a computing grid that maintains a predetermined pricing and availability database with each sub-request to determine the pricing and the availability for the plurality of travel inventory items.

7. The method of any of the preceding claims, wherein the at least one time constraint includes a desired minimum stay for the at least one destination, and the travel paths are built based at least in part on the desired minimum stay for the at least one destination.

8. The method of any of claims 1 to 6, wherein the at least one time constraint includes a specified date range for travel, a specified minimum stay for at least one destination, a specified maximum stay for at least one destination, a specified return date, a specified date to be at the at least one destination, a specified position of at the at least one destination in an order of travel, or any combination thereof.

9. The method of any of the preceding claims 1, wherein the travel request indicates whether a hotel and/or a car rental is desired for the at least one destination, and the travel paths are built based at least in part on whether a hotel and/or a car rental is desired for the at least one destination.

10. The method of any of the preceding claims 1, wherein the at least one destination is a plurality of destinations, each travel path of the plurality of travel paths comprises the plurality of destinations, and each travel solution for the travel request comprises priced travel inventory items for travel services corresponding to the origin and the plurality of destinations.

11. The method of claim 10, wherein a particular travel path of the plurality of travel paths includes a return connection to a particular destination of the plurality of destinations from another destination of the plurality of destinations.

12. The method of claim 11, wherein the particular travel path of the plurality of travel paths includes a first stay at the particular destination before travel to the another destination and a second stay at the particular destination after the return connection from the another destination.

13. A system for determining at least one travel solution, the system comprising:
at least one processor; and
program code configured to be executed by the at least one processor to cause the at least one processor to receive a travel request that indicates an origin, at least one destination, and at least one time constraint, build a plurality of travel paths comprising the origin and the at least one destination based at least in part on the at least one time constraint, determine at least one candidate travel solution for each travel path based at least in part on the at least one time constraint, and determine at least one travel solution for the travel request based at least in part on pricing and availability for the at least one candidate travel solution for each travel path.

14. The system of claim 13 wherein the program code is further configured upon execution to cause the processor to execute the method of any of claims 2 to 12.

15. A program product comprising:
a computer readable storage medium; and
program code stored on the computer readable storage medium and configured, upon execution, to cause at least one processor to determine at least one travel graph for the origin and the at least one destination based at least in part on a travel characteristic of the at least one destination, and the plurality of travel paths are built based at least in part on the at least one travel graph.
